(19) Europäisches Patentamt
European Patent Office
Office européen des brevets

(11) EP 4 269 494 B1

(12) **EUROPEAN PATENT SPECIFICATION**

(45) Date of publication and mention of the grant of the patent:
**18.06.2025 Bulletin 2025/25**

(21) Application number: **21914983.8**

(22) Date of filing: **26.10.2021**

(51) International Patent Classification (IPC):
***C08K 7/02*** (2006.01) ***C08L 21/00*** (2006.01)
***B60C 3/04*** (2006.01) ***B60C 9/18*** (2006.01)
***B60C 9/00*** (2006.01) ***B60C 9/20*** (2006.01)
***B60C 11/03*** (2006.01) ***B60C 1/00*** (2006.01)

(52) Cooperative Patent Classification (CPC):
**B60C 3/04; B60C 9/0007; B60C 9/0064; B60C 9/2006; B60C 11/033;** B60C 2001/0066; B60C 2009/2061; B60C 2009/2077; B60C 2009/2083; B60C 2011/0341; B60C 2011/0353; B60C 2011/0358; Y02T 10/86

(86) International application number:
**PCT/JP2021/039505**

(87) International publication number:
**WO 2022/145122 (07.07.2022 Gazette 2022/27)**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2020 JP 2020218132**

(43) Date of publication of application:
**01.11.2023 Bulletin 2023/44**

(73) Proprietor: **Sumitomo Rubber Industries, Ltd.**
**Kobe-shi, Hyogo 651-0072 (JP)**

(72) Inventors:
- **MISAKI Momoka**
  **Kobe-shi, Hyogo 651-0072 (JP)**
- **DONG Miao**
  **Kobe-shi, Hyogo 651-0072 (JP)**
- **KAWAI Hiroki**
  **Kobe-shi, Hyogo 651-0072 (JP)**

(74) Representative: **TBK**
**Bavariaring 4-6**
**80336 München (DE)**

(56) References cited:
**EP-A2- 1 209 009**
**WO-A1-2020/080438**
**JP-A- 2010 126 123**
**JP-A- 2012 254 668**
**JP-A- 2015 080 972**
**JP-A- 2015 080 972**
**JP-A- 2016 203 685**
**JP-A- 2016 203 685**
**JP-B1- 6 769 573**
**JP-B1- 6 769 573**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 269 494 B1

## Description

[TECHNICAL FIELD]

The present invention relates to pneumatic tires, and more particularly to pneumatic tires with belt layers.

[BACKGROUND ART]

In recent years, from the viewpoint of increasing interest in environmental issues and economic efficiency, there has been an increasing demand for fuel efficiency in automobiles and for improved fuel efficiency of pneumatic tires (hereinafter, simply referred to as "tires") installed in automobiles as well.

The fuel efficiency of a tire can be evaluated by the rolling resistance, and it is known that the smaller the rolling resistance, the better the fuel efficiency of the tire.

Therefore, conventionally, it has been proposed to reduce the rolling resistance by devising the composition of the rubber composition constituting the tread portion of the tire (for example, Patent Documents 1 to 4).

Patent Documents 5, 6 and 7 disclose pneumatic tires having the features of the preamble of claim 1.

[PRIOR ART DOCUMENT]

[PATENT DOCUMENT]

[Patent Document 1] JP 2018- 178034 A
[Patent Document 2] JP 2019- 089911 A
[Patent Document 3] WO 2018/186367 A1
[Patent Document 4] JP 2019- 206643 A
[Patent Document 5] EP 1 209 009 A2
[Patent Document 6] JP 2015- 080972 A
[Patent Document 7] JP 2016- 203685 A

[SUMMARY OF THE INVENTION]

[PROBLEMS TO BE SOLVED BY THE INVENTION]

However, with the development of expressways in recent years, the number of opportunities to travel long distances at high speeds has increased dramatically. Under this circumstance, tires manufactured by the above-mentioned conventional technology cannot be said to have sufficient low rolling resistance and noise performance during high-speed running, and further improvement is required.

Accordingly, an object of the present invention is to provide a pneumatic tire that satisfactorily achieves both low rolling resistance and noise performance during high-speed running.

[MEANS FOR SOLVING THE PROBLEM]

The present inventors have conducted intensive studies on how to solve the above problems, found that the above problems can be solved by the invention described below, and completed the present invention.

The above object is achieved by a pneumatic tire having the features of claim 1. Advantageous further developments are defined in the dependent claims.

[EFFECT OF THE INVENTION]

According to the present invention, it is possible to provide a pneumatic tire that satisfactorily achieves both low rolling resistance and noise performance during high-speed running.

[EMBODIMENTS FOR CARRYING OUT THE INVENTION]

[1] Features of the tire according to the present invention

First, the features of the pneumatic tire (hereinafter also simply referred to as "tire") according to the present invention will be described.

1. Overview

A tire according to the present invention is a pneumatic tire that has a tread portion and a belt layer, and the belt layer uses monofilament cords as reinforcing cords. Then, the number of monofilament cords arranged per 5 cm in the tire width direction (hereinafter also referred to as "ends") e (cord/5 cm) in the cross section of the belt layer in the tire radial direction, and the tire cross-sectional width Wt (mm), when the tire is installed on a standardized rim and the internal pressure is set to 250 kPa satisfy $e/(0.31Wt + 14.35) > 1.09$ (formula 1) and $e/(0.31Wt + 56.45) < 0.75$ (formula 2).

By having such features, as will be described later, it is possible to provide a tire that satisfactorily achieves both low rolling resistance and noise performance during high-speed running.

In the above description, the tire cross-sectional width Wt is the linear distance between the sidewalls including all the patterns, characters, etc. on the tire side surface (the total width of the tire) and excluding patterns, characters, etc. on the tire side surface, when the tire is installed on a standardized rim, the internal pressure is set to 250 kPa and no load is applied.

Here, the above mentioned "standardized rim" is a rim defined for each tire in the standard system including the standard on which the tire is based. For example, in the case of the above mentioned JATTA, standard rims in applicable sizes described in "JATTA YEAR BOOK", in the case of ETRTO (The European Tire and Rim Technical Organization), "Measuring Rim" described in "STANDARDS MANUAL", and in the case of TRA (The Tire and Rim Association, Inc.), "Design Rim" described in "YEAR BOOK" mean the "regular rim". In the case of tires that are not specified in the standard, it means a rim having the smallest rim diameter, and then having the narrowest width among the rims which can be assembled and the internal pressure can be maintained, that is, rims not causing air leakage between the rim and the tire.

The number of monofilament cords arranged per 5 cm in the tire width direction (ends) can be indicated by measuring the number of monofilament cords in the range of $\pm 2.5$ to 5.0 cm with respect to the equatorial plane of the tire cross section and converting the number of cords per 5 cm.

2. Mechanism of Manifestation of Effect in Tires according to the present invention

The mechanism of manifestation of effect according to the present invention, that is, the mechanism by which both low rolling resistance and noise performance during high-speed running are sufficiently achieved, is presumed as follows.

In order to reduce the rolling resistance, it is conceivable to reduce the weight of the tire, and as a concrete means thereof, it is conceivable to use monofilament cords as the reinforcing cords of the belt layers.

However, since the monofilament cord is not twisted, it is considered difficult to absorb vibrations within the monofilament cord, and when the monofilament cords are closely arranged in a tire with a narrow tread width, resonance may occur between adjacent monofilament cords. In addition, as the distance between the monofilament cords is shortened, resonance at high frequencies is more likely to occur, and there is concern that noise performance will deteriorate, especially during high-speed running.

Therefore, it is considered, as a countermeasure, that if the arrangement of the monofilament cords is made sparse and the distance between the monofilament cords is increased, as the tread width becomes narrower, it is possible to prevent the occurrence of resonance between the monofilament cords and improve the noise performance.

However, on the other hand, if the arrangement of the monofilament cords becomes too sparse, the restraint of the tread portion by the belt layer will decrease, so the tread portion will become round during high-speed running, the amount of deformation will increase, and there is a concern that the rolling resistance will deteriorate. Particularly, a tire with a wide tread width requires a stronger restraining force because the force that expands and deforms the tread portion by the internal pressure also increases. Therefore, it is conceivable to increase the number of arranged monofilament cords as the width of the tread portion increases.

Based on these ideas, the present inventors have conducted experiments and studies on the preferable relationship between the number of monofilament cords arranged e (cords/5 cm) and the tread width, that is, the tire cross-sectional width Wt (mm). As a result, it was found that both low rolling resistance $e/(0.31Wt+56.45)$ and noise performance at high-speed running can be achieved, if the above $e/(0.31Wt + 14.35) > 1.09$ (formula 1) and $e/(0.31Wt + 56.45) < 0.75$ (formula 2) are satisfied. Thus, the present invention has been completed.

That is, as the tire cross-sectional width (tread width) becomes narrower, the number of monofilament cords arranged is reduced to make them sparse, as shown in (formula 2), the distance between the monofilament cords increases, the resonance between the monofilament cords can be suppressed to improve the noise performance. On the

other hand, as the tire cross-sectional width (tread width) increases, by increasing the lower limit of the number of monofilament cords arranged (increasing the number of arranged monofilament cords) as shown in (formula 1), the binding force of the belt layer can be maintained, and low rolling resistance during high-speed running can be improved. By satisfying (formula 1) and (formula 2), it is possible to sufficiently achieve both low rolling resistance and noise performance during high-speed running.

The specific e/ (0.31Wt + 14.35) is preferably 1.01 or more, more preferably 1.04 or more, further preferably 1.05 or more. , further preferably 1.07 or more, further preferably 1.09 or more, further preferably 1.12 or more, further preferably 1.19 or more, further preferably 1.21 or more, further preferably 1.23 or more, further preferably 1.24 or more, further preferably 1.30 or more, further preferably 1.41 or more, and further preferably 1.42 or more.

In addition, the specific e/ (0.31Wt + 56.45) is preferably 0.95 or less, more preferably 0.94 or less, further preferably 0.80 or less, further preferably 0.79 or less, further preferably 0.75 or less, further preferably 0.69 or less, further preferably 0.68 or less, further preferably 0.67 or less, further preferably 0.66 or less, further preferably 0.65 or less, further preferably 0.64 or less, and further preferably 0.63 or less.

As a result of further experiments and studies, when the tire cross-sectional width Wt is less than 200 mm, it was found that satisfying e/ (0. 1924Wt + 37.88) > 1 (formula 3) or e/ (0.1335Wt+49.644)> 1 (formula 4) is more preferred.

In this case, the specific e/ (0.1924Wt + 37.88) is preferably 1.01 or more, more preferably 1.02 or more, further preferably 1.03 or more, further preferably 1.05 or more, further preferably 1.16 or more, and further preferably 1.22 or more. Further, the specific e/ (0.1335Wt + 49.644) > 1 is preferably 1.01 or more, more preferably 1.03 or more, further preferably 1.15 or more, and further preferably 1.19 or more.

Although the lower limit of the tire cross-sectional width Wt is not particularly limited, it is preferably 125 mm or more, more preferably 175 mm or more, considering that the tire is an automobile tire. Although the upper limit is not particularly limited, it is preferably 300 mm or less, more preferably 250 mm or less.

The number e of the monofilament cords arranged per 5 cm in the tire width direction (cords/5 cm) is also not particularly limited, but is preferably more than 80 cords/5 cm, more preferably 82 cords/5 cm or more, further preferably 85 cords/5 cm or more, and further preferably 95/5 cm or more. On the other hand, it is preferably less than 150 lines/5 cm, and more preferably 120 lines/5 cm or less.

The cord outer diameter d (mm) of the monofilament cord is also not particularly limited, but is preferably 0.1 mm or more, and more preferably 0.2 mm or more. On the other hand, it is preferably 0.5 mm or less, and more preferably 0.4 mm or less.

The "cord outer diameter" in the above description refers to the cord outer diameter of the monofilament cord of the belt layer in the direction parallel to the tire width direction in the tire cross section, and the average value of the cord outer diameters in the direction parallel to the tire width direction of the cords measured when calculating the end e (cords/5 cm) can be used.

More preferred aspects of the tire according to the present invention

[2] The tire according to the present invention can obtain even greater effects by adopting the following aspects.

1. Relationship between physical properties of coated rubber composition and distance between reinforcing cords

As described above, when the distance between the monofilament cords becomes shorter, resonance at high frequencies is likely to occur, and there is concern about deterioration of noise performance during high-speed running.

The present inventor focused on the loss tangent tan $\delta$ of the rubber composition coated on the reinforcing cords as a parameter for suppressing the occurrence of such resonance between monofilament cords. That is, as the loss tangent tan $\delta$ is a parameter that indicates energy absorption performance, and it is thought that the greater the value, the more energy can be absorbed, it is thought that deterioration of noise performance during high-speed running can be suppressed even when the distance between monofilament cords is shortened and resonance occurs at high frequencies, since the rubber composition absorbs the vibration energy.

As a result of experiments and studies, it was found that, in the rubber composition coated on the reinforcing cords in the belt layer, when the loss tangent tan $\delta$ measured under the conditions of temperature of 70°C, initial strain of 5%, dynamic strain of $\pm$1%, frequency of 10 Hz, deformation mode: tensile and the average distance L (mm) between two monofilament cords adjacent in the width direction in the tread portion satisfy $L \times \tan\delta > 0.017$ (formula 5), the deterioration of noise performance during high-speed running can be sufficiently suppressed.

That is, it was found that deterioration of noise performance during high-speed running can be suppressed by increasing the lower limit of tan $\delta$ (i.e. coating with a rubber composition having a large tan $\delta$) as the average distance between monofilament cords becomes smaller.

In the above, the tan $\delta$ of the rubber composition can be measured using a viscoelasticity measuring device such as "Eplexor (registered trademark)" manufactured by GABO. Then, the average distance L (mm) between two adjacent

monofilament cords can be obtained from the following formula based on the cord outer diameter d (mm) and the ends e (cords/5 cm) of the monofilament cords.

$$L = \{50-(d \times e)\} / (e-1)$$

In the present invention, the specific $L \times \tan\delta$ is preferably 0.018 or more, more preferably 0.020 or more, further preferably 0.022 or more, further preferably 0.026 or more, further preferably 0.027 or more, further preferably 0.028 or more, and further preferably 0.029 or more.

2. Angle of reinforcing cord (monofilament cord)

The angle between the reinforcing cord (monofilament cord) of the belt layer and the straight line parallel to the tire circumferential direction is preferably 10° or more, more preferably 15° or more, further preferably 20° or more, and further preferably 23° or more. On the other hand, it is preferably 35° or less, more preferably 33° or less, and further preferably 30° or less.

By arranging the monofilament cords of the belt layer at such angle, it is possible to obtain a hoop effect, which firmly restrains almost the entire width of the tread portion and suppresses the amount of deformation of the tread portion during rolling. Therefore, it is possible to achieve both low rolling resistance and noise performance during high-speed running.

3. Multi-layering of belt layers

In the present invention, it is preferred that the belt layer is multilayered by providing at least two layers, and the average distance D (mm) between belt layers in the tread portion is 0.5 mm or less in at least one set of belt layers adjacent in the tire radial direction. The distance D is more preferably 0.45 mm or less, and further preferably 0.22 mm or less.

By arranging one set of belt layers with such an average distance D, each belt layer cooperates with each other to constrain the tread portion, suppress the amount of deformation of the tread portion, and both low rolling resistance and noise performance can be achieved.

The "average distance D between the belt layers" referred to here is the average distance between the monofilament cords of the belt layers, and is equal to the distance between the outer surface of the monofilament cord of the inner belt layer and the inner surface of the monofilament cord of the belt layer on the surface side of the two overlapping belt layers on the equatorial plane.

When the belt layers are multi-layered, at least one belt layer should satisfy the above-described relation with respect to the above-mentioned "$L \times \tan\delta$".

4. Belt reinforcement layer

In the present invention, when the belt reinforcing layer is provided radially outward of the tire from the belt layer, the deformation of the tread portion is further suppressed, and both low rolling resistance and noise performance during high-speed running are achieved more sufficiently, and therefore preferable. In this case, it is preferred that the average distance between the monofilament cords in the belt layer and the cords in the belt reinforcing layer is preferably 0.1 mm or more and 0.5 mm or less.

5. Grooves in the tread

Preferably, the tire according to the present invention has a circumferential groove extending continuously in the tire circumferential direction in the tread portion. It is preferable that the ratio ($L_{80}/L_0$) of the groove width $L_{80}$ at a depth of 80% of the maximum depth of the circumferential groove to the groove width $L_0$ of the circumferential groove on the contact surface of the tread portion is preferably 0.3 or more and 0.7 or less. As a result, the movement of the entire land portion can be suppressed at the bottom surface of the land portion of the tread portion, and both the low rolling resistance and the noise performance at high-speed running can be achieved. $L_{80}/L_0$ is more preferably 0.35 or more, and further preferably 0.40 or more. It is more preferably 0.65 or less, and further preferably 0.60 or less.

The above-mentioned $L_0$ and $L_{80}$ refer to the linear distance ($L_0$) between the groove end portions at the tread surface portion and the minimum distance ($L_{80}$) between the groove walls at a groove depth of 80%, respectively, of the tread circumferential groove in a tire installed on a standardized rim, having internal pressure of 250 kPa and in a no-load state. Simply, it is possible to obtain in a state where the bead portion of the section cut out in the tire radial direction with a width of 2 to 4 cm is pressed down according to the corresponding rim width.

Preferably, the tread portion has a plurality of circumferential grooves, and the total cross-sectional area of the plurality of circumferential grooves is 10% or more and 30% or less of the cross-sectional area of the tread portion. As a result, movement of the tread portion can be suppressed, and both low rolling resistance and noise performance during high-speed running can be achieved. It is more preferably 15% or more, and further preferably 18% or more. On the other hand, it is more preferably 27% or less, and futher preferably 25% or less.

The cross-sectional area of the circumferential groove described above refers to the total value of the area composed of a straight line connecting the end portions of the circumferential groove of the tread and a groove wall in a tire installed on a standardized rim, having an internal pressure of 250 kPa and in a no-load state. It can be simply obtained in a state where the bead portion of the section cut out in the tire radial direction with a width of 2 to 4 cm is pressed down according to the rim width

The cross-sectional area of the tread portion refers to the area outside the tire radial direction from the belt layer in the region separated by a straight line connecting the circumferential groove ends of the tread portion and two straight lines parallel to the equatorial plane that pass through both ends of the widest among the tread surface profile formed by the tread surface and belt layer, in the radial cross section of the tire installed on a standardized rim, having an internal pressure of 250 kPa and in no-load state. When the belt reinforcing layer using organic fibers and/or steel cords is provided on the outer side in the radial direction of the tire from the belt layer, it refers to the area on the outer side in the radial direction from the belt reinforcing layer.

Further, it is preferable that the tread portion has a plurality of lateral grooves extending in the tire axial direction, and the total volume of the plurality of lateral grooves is 2.0% or more and 5.0% or less of the volume of the tread portion. This can suppress the movement of the tread portion and both the low rolling resistance and the noise performance at high-speed running can be achieved. It is more preferably 2.2% or more, further preferably 2.5% or more, and particularly preferably 2.7% or more. On the other hand, it is more preferably 4.0% or less, further preferably 3.5% or less, and particularly preferably 3.0% or less.

The above-mentioned volume of the lateral groove refers to the total volume of the volume composed of the surface connecting the ends of the lateral groove and the groove wall in a tire installed on a standardized rim, having an internal pressure of 250 kPa and in a no-load state. It can be calculated by obtaining the volume of each lateral groove and obtain the total value. Further, the volume of the tread portion can be calculated by calculating the area of the tread portion from the section and multiplying it by the outer diameter, and finding the difference from the volume of the lateral groove.

[3] Embodiment

Hereinafter, the present invention will be specifically described based on embodiments.

1. Rubber composition for belt layer

(1) Compounding material

The rubber composition coated on the monofilament cords in the belt layer of the tire according to the present invention can be obtained from the rubber component and other compounding materials described below.

(a) Rubber component

In the present embodiment, the rubber component is not particularly limited, and rubbers (polymers) commonly used in the manufacture of tires, such as isoprene-based rubber, butadiene rubber (BR), styrene-butadiene rubber (SBR), diene-based rubber such as nitrile rubber (NBR), butyl-based rubber such as butyl rubber, and the like can be used. Among these, isoprene-based rubbers are preferable, and NR is preferably used because the cis structure of polyisoprene is close to 100% and the tensile strength is superior to other rubber components. Note that BR and SBR may be used together as necessary.

(a-1) Isoprene rubber

The content (total content) of the isoprene-based rubber in 100 parts by mass of the rubber component is preferably 60 parts by mass or more, more preferably 80 parts by mass or more, and further preferably 90 parts by mass or more.

Examples of isoprene-based rubbers include natural rubber (NR), isoprene rubber (IR), reformed NR, modified NR, and modified IR, but NR is preferable from the viewpoint of excellent strength.

As NR, for example, those commonly used in the tire industry, such as SIR20, RSS#3, and TSR20, can be used. The IR is not particularly limited, and for example, those commonly used in the tire industry such as IR2200 can be used.

Examples of reformed NR include deproteinized natural rubber (DPNR), and high-purity natural rubber (UPNR). Examples of modified NR include epoxidized natural rubber (ENR), hydrogenated natural rubber (HNR), and grafted natural rubber. Examples of modified IR include epoxidized isoprene rubber, hydrogenated isoprene rubber, and grafted isoprene rubber These may be used alone or in combination of two or more.

(a-2) BR

In the present embodiment, 5 parts by mass or more and 25 parts by mass or less of BR may be used together with NR in the rubber component, if necessary.

The weight average molecular weight of BR is, for example, more than 100,000 and less than 2,000,000. The vinyl bond content (1,2-bonded butadiene unit content) of BR is, for example, more than 1% by mass and less than 30% by mass. The cis content of BR is, for example, more than 1% by mass and 98% by mass or less. The trans content of BR is, for example, more than 1% and less than 60% by mass. The cis content can be measured by infrared absorption spectrometry.

BR is not particularly limited, and BR with high cis content (90% or more of cis content), BR with low cis content, BR containing syndiotactic polybutadiene crystals, and the like can be used. BR may be either unmodified BR or modified BR, and modified BR may be, for example, S-modified BR modified with a compound (modifying agent) represented by the following formula.

[Chemical 1]

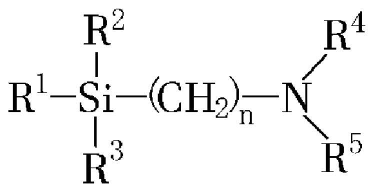

In the formula, $R^1$, $R^2$ and $R^3$ are the same or different and represent an alkyl group, alkoxy group, silyloxy group, acetal group, carboxyl group (-COOH), mercapto group (-SH) or derivatives thereof. $R_4$ and $R_5$ are the same or different and represent a hydrogen atom or an alkyl group. $R_4$ and $R_5$ may combine to form a ring structure with the nitrogen atom. n represents an integer.

Examples of modified BR modified with the compound (modifier) represented by the above formula include BR whose polymer terminal (active terminal) has been modified with the compound represented by the above formula.

$R^1$, $R^2$ and $R^3$ are preferably alkoxy groups (preferably an alkoxy group having 1 to 8 carbon atoms, and more preferably an alkoxy group having 1 to 4 carbon atoms). An alkyl group (preferably an alkyl group having 1 to 3 carbon atoms) is suitable for $R^4$ and $R^5$. n is preferably 1-5, more preferably 2-4, and further preferably 3. Also, when $R^4$ and $R^5$ combine to form a ring structure with a nitrogen atom, it is preferably a 4- to 8-membered ring. The alkoxy group also includes a cycloalkoxy group (cyclohexyloxy group, etc.) and an aryloxy group (phenoxy group, benzyloxy group, etc.).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

As modified BR, modified BR modified with the following compounds (modifying agents) can also be used. Examples of the modifier include polyglycidyl ethers of polyhydric alcohols such as ethyleneglycol diglycidyl ether, glycerin triglycidyl ether, trimethylolethane-triglycidyl ether and trimethylolpropane triglycidyl ether;

polyglycidyl ether of aromatic compound having two or more of phenol group such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4'-diglycidyldiphenylamine and 4,4'-diglycidyldibenzyl-methylamine;
diglycidylamino compounds such as diglycidylaniline, N, N'-diglycidyl-4-glycidyloxyaniline, diglycidylorthotoluidine, tetraglycidylmetaxylene diamine , tetraglycidylaminodiphenylmethane, tetraglycidyl-p-phenylenediamine, diglycidylaminomethylcyclohexane and tetraglycidyl-1,3-bisaminomethyl cyclohexane;
amino group-containing acid chlorides such as bis-(1-methylpropyl) carbamate chloride, 4-morpholincarbonyl chloride, 1-pyrrolidincarbonyl chloride, N, N-dimethylcarbamate chloride and N, N-diethylcarbamate chloride;

epoxy group-containing silane compounds such as 1,3-bis-(glycidyloxypropyl)tetramethyldisiloxane and (3-glycidyloxypropyl) - pentamethyldisiloxane;
sulfide group-containing silane compounds such as (trimethylsilyl) [3-(trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;
N-substituted aziridine compound such as ethyleneimine and propyleneimine; alkoxysilanes such as methyltriethoxy silane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane and N, N-bis (trimethylsilyl) aminoethyltriethoxysilane;
(thio) benzophenone compounds having an amino group and / or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone and N, N, N', N'-bis-(tetraethylamino) benzophenone;
benzaldehyde compounds having an amino group and / or a substituted amino group such as 4-N, N-dimethylaminobenzaldehyde, 4-N, N-diphenylaminobenzaldehyde and 4-N, N-divinylamino benzaldehyde;
N-substituted pyrrolidone such as N-methyl-2-pyrrolidone, N-vinyl-2-pyrrolidone, N-phenyl-2-pyrrolidone, N-t-butyl-2-pyrrolidone and N-methyl-5-methyl-2-pyrrolidone;
N-substituted piperidone such as N-methyl-2-piperidone, N-vinyl-2-piperidone and N-phenyl-2-piperidone; and
N-substituted lactams such as N-methyl-ε-caprolactam, N-phenyl-ε-caprolactam, N-methyl-ω-laurilolactam, N-vinyl-ω-laurillolactam, N-methyl-β-propiolactam and N-phenyl-β-propiolactam. In addition to the above, N, N-bis-(2,3-epoxypropoxy) -aniline, 4,4-methylene-bis- (N, N-glycidyl-aniline), tris-(2,3-epoxypropyl)-1,3,5-triazine-2,4,6-triones, N,N-diethylacetamide, N-methylmaleimide, N, N-diethylurea, 1,3-dimethylethyleneurea , 1,3-divinylethyleneurea, 1,3-diethyl-2-imidazolidinone, 1-methyl-3-ethyl-2-imidazolidinone, 4-N,N-dimethylaminoacetophen, 4-N,N-diethylaminoacetophenone, 1,3-bis (diphenylamino)-2-propanone, 1,7-bis (methylethylamino)-4-heptanone, and the like can be mentioned also. The modification with the above compound (modifier) can be carried out by a known method.

As the modified BR, for example, tin-modified BR can also be used. Tin-modified BR is obtained by polymerizing 1,3-butadiene with a lithium initiator followed by adding a tin compound. A tin-modified BR in which the terminal is further bonded by a tin-carbon bond is preferable.
Examples of lithium initiators include lithium-based compounds such as alkyllithium, aryllithium, vinyllithium, organotinlithium, and organonitrogen lithium compounds, and lithium metal. By using the lithium initiator as an initiator for tin-modified BR, tin-modified BR having a high vinyl content and a low cis content can be produced.
Examples of the tin compounds include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraallyltin, and p-tributyltin styrene.
Content of tin atoms in the tin-modified BR is preferably 50 ppm or more, more preferably 60 ppm or more. On the other hand, it is preferably 3000 ppm or less, more preferably 2500 ppm or less, and further preferably 250 ppm or less.
Further, the molecular weight distribution (Mw/Mn) of tin-modified BR is preferably 2 or less, and more preferably 1.5 or less.
Further, the vinyl bond content in the tin-modified BR is preferably 5% by mass or more, more preferably 7% by mass or more. On the other hand, the vinyl bond content of tin-modified BR is preferably 50% by mass or less, and more preferably 20% by mass or less.
The above described S-modified BR and tin-modified BR may be used alone, or two or more of them may be used in combination.
As BR, for example, products of Ube Industries, Ltd., JSR Corporation, Asahi Kasei Corporation, and Nippon Zeon Corporation can be used.

(a-3) SBR

In the present embodiment, the rubber component may optionally contain 5 to 25 parts by mass of SBR together with NR, or may be used in combination with the above BR.
The weight average molecular weight of SBR, for example, is more than 100,000 and less than 2 million. The styrene content of SBR is preferably more than 5% by mass, more preferably more than 10% by mass, and further more preferably more than 20% by mass. On the other hand, it is preferably less than 50% by mass, more preferably less than 40% by mass, and further more preferably less than 35% by mass. The vinyl bond amount of SBR is, for example, more

than 5% by mass and less than 70% by mass. The structure identification of SBR (measurement of styrene content and vinyl bond amount) can be performed using, for example, an apparatus of the JNM-ECA series manufactured by JEOL Ltd.

The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR. These may be used alone or in combination of two or more.

The modified SBR may be any SBR having a functional group that interacts with a filler such as silica. Examples thereof include SBR (terminal modified SBR having the functional group at the end) in which at least one end of the SBR is modified with a compound having the above functional group (modifying agent), main chain modified SBR having the functional group in the main chain, and main chain terminal modified SBR having the functional group in the main chain and the terminal (for example, main chain terminal modified SBR having the above functional group in the main chain and at least one end modified with the above modifying agent) and terminally modified SBR which is modified (coupling) by a polyfunctional compound having two or more epoxy groups in the molecule and into which a hydroxyl group or an epoxy group has been introduced.

As the SBR, for example, SBR manufactured and sold by Sumitomo Chemical Co., Ltd., JSR Corporation, Asahi Kasei Corporation, Nippon Zeon Corporation, etc. can be used. The SBR may be used alone or in combination of two or more.

(a-4) Other rubber components

In addition, as other rubber components, if necessary, rubber (polymer) generally used for manufacturing tires such as nitrile rubber (NBR) may be included.

(b) Compounding materials other than rubber components

(b-1) Filler

In the present embodiment, the rubber composition preferably contains a filler. Specific examples of the filler include silica, carbon black, graphite, calcium carbonate, talc, alumina, clay, aluminum hydroxide, and mica. Among these, carbon black can be preferably used as the reinforcing agent. It is also preferable to use silica as a reinforcing agent, if necessary, and, in this case, it is preferable to use it together with a silane coupling agent.

(i) Carbon black

The rubber composition preferably contains carbon black. Content of carbon black is, for example, preferably 10 parts by mass or more and 100 parts by mass or less, more preferably 40 parts by mass or more and 70 parts by mass or less, and further preferably 50 parts by mass or more and 60 parts by mass or less, with respect to 100 parts by mass of the rubber component.

Carbon black is not particularly limited, and examples thereof include furnace black (furnace carbon black) such as SAF, ISAF, HAF, MAF, FEF, SRF, GPF, APF, FF, CF, SCF and ECF; acetylene black (acetylene carbon black); thermal blacks (thermal carbon blacks) such as FT and MT; and channel blacks (channel carbon blacks) such as EPC, MPC and CC. These may be used individually by 1 type, and may use 2 or more types together.

Nitrogen adsorption specific surface area ($N_2SA$) of carbon black is, for example, more than 30 $m^2/g$ and less than 250 $m^2/g$. The amount of dibutyl phthalate (DBP) absorbed by carbon black is, for example, more than 50 ml/100 g and less than 250 ml/100 g. The nitrogen adsorption specific surface area of carbon black is measured according to ASTM D4820-93, and the amount of DBP absorbed is measured according to ASTM D2414-93.

The specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(ii) Silica

The rubber composition preferably contains silica. The BET specific surface area of the silica is preferably more than 140 $m^2/g$, more preferably more than 160 $m^2/g$, from the viewpoint of obtaining good durability performance. On the other hand, from the viewpoint of obtaining good rolling resistance at high-speed running, it is preferably less than 250 $m^2/g$, and more preferably less than 220 $m^2/g$.

Moreover, the content of the silica with respect to 100 parts by mass of the rubber component is preferably 3 parts by mass or more, and more preferably 5 parts by mass or more when the silane coupling agent is not used in combination.

On the other hand, it is preferably 25 parts by mass or less and more preferably 15 parts by mass or less. When performing combined use with a silane coupling agent, it is preferably 25 mass parts or more. On the other hand, it is preferably 50 parts by mass or less, more preferably 40 parts by mass or less, and further preferably 30 parts by mass or less. The BET specific surface area mentioned above is the value of $N_2SA$ measured by the BET method according to ASTM D3037-93.

Examples of silica include dry silica (anhydrous silica) and wet silica (hydrous silica). Among them, wet silica is preferable because it has large number of silanol groups.

As the silica, for example, products of Degussa, Rhodia, Tosoh Silica Co., Ltd., Solvay Japan Co., Ltd., Tokuyama Corporation, etc. can be used.

(iii) Silane coupling agent

As described above, when using silica, it is possible to use a silane coupling agent together. The silane coupling agent is not particularly limited, and examples thereof include sulfide-based ones such as bis(3-triethoxysilylpropyl) tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;

mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as $\gamma$-glycidoxypropyltriethoxysilane and $\gamma$-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. These may be used alone or in combination of two or more.

As the silane coupling agent, for example, products of Degussa, Momentive, Shin-etsu Silicone Co., Ltd., Tokyo Chemical Industry Co., Ltd., Azumax Co., Ltd., Toray Dow Corning Co., Ltd., etc. can be used.

The content of the silane coupling agent is, for example, more than 3 parts by mass and less than 15 parts by mass with respect to 100 parts by mass of silica.

(iv) Other fillers

The rubber composition may further contain fillers such as graphite, calcium carbonate, talc, alumina, clay, aluminum hydroxide, and mica, which are generally used in the tire industry, in addition to the above-mentioned carbon black and silica. These contents are, for example, more than 0.1 part by mass and less than 200 parts by mass with respect to 100 parts by mass of the rubber component.

(b-2) Curable resin component

The rubber composition preferably contains a curable resin component such as modified resorcin resin and modified phenol resin. This makes it possible to improve adhesion to steel cords without significantly deteriorating heat build-up and elongation at break, and to facilitate the generation of large reaction force with rubber and monofilament cords (for example, steel cords).

Specific examples of the modified resorcin resin include Sumikanol 620 (modified resorcin resin) manufactured by Taoka Chemical Industry Co., Ltd., and examples of the modified phenol resin include PR12686 (cashew oil modified phenolic resin) manufactured by Sumitomo Bakelite Co., Ltd.

The content of the curable resin component is preferably 1 part by mass or more, and more preferably 2 parts by mass or more, with respect to 100 parts by mass of the rubber component, for example, from the viewpoint of obtaining a large reaction force during deformation. On the other hand, from the viewpoint of maintaining breaking strength, it is preferably 10 parts by mass or less, and more preferably 8 parts by mass or less.

When using the modified resorcin resin, it is preferable to also contain a methylene donor as a curing agent. Examples of the methylene donor include hexamethylenetetramine (HMT), hexamethoxymethylol melamine (HMMM) and hexamethylol melamine pentamethyl ether (HMMPME). It is preferably contained in an amount of 5 parts by mass or more and about 15 parts by mass, with respect to 100 parts by mass of the curable resin component. If it is too small, a

sufficient complex elastic modulus may not be obtained. On the other hand, if the amount is too large, the viscosity of the rubber may increase and the workability may deteriorate.

As a specific methylene donor, for example, Sumikanol 507 manufactured by Taoka Chemical Industry Co., Ltd. can be used.

(b-3) Resin component

From the viewpoint of workability (imparting tackiness), the rubber composition preferably contains a resin component as necessary. The resin component may be solid or liquid at room temperature. Specific examples of the resin components include rosin-based resin, styrene-based resin, coumarone-based resin, terpene-based resin, C5 resin, and C9 resin, C5C9 resins, and acrylic resins, and two or more of them may be used in combination. The content of the resin component is preferably more than 2 parts by mass and less than 45 parts by mass, and more preferably less than 30 parts by mass, with respect to 100 parts by mass of the rubber component.

The rosin-based resin is a resin containing rosin acid as a main component, which is obtained by processing pine fat. This rosin-based resin (rosins) can be classified according to the presence or absence of modification, and can be classified into non-modified rosin (unmodified rosin) and rosin modified product (rosin derivative). Non-modified rosins include tall rosins (also known as tall oil rosins), gum rosins, wood rosins, asymmetric rosins, polymerized rosins, hydrogenated rosins, and other chemically modified rosins. The rosin-modified product is a modified product of non-modified rosin, and examples thereof include rosin esters, unsaturated carboxylic acid-modified rosins, unsaturated carboxylic acid-modified rosin esters, rosin amide compounds, and amine salts of rosin.

The styrene-based resin is a polymer using a styrene-based monomer as a constituent monomer, and examples thereof include a polymer obtained by polymerizing a styrene-based monomer as a main component (50% by mass or more). Specifically, a homopolymer obtained by independently polymerizing styrene-based monomers, such as styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene and p-chlorostyrene, a copolymer obtained by copolymerizing two or more types of styrene-based monomers, and a copolymer obtained by copolymerizing a styrene-based monomer and another monomer that can be copolymerized with the styrene-based monomer.

Examples of the other monomer include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene; olefins such as 1-butene and 1-pentene; and α, β-unsaturated carboxylic acids and acid anhydrides thereof such as maleic anhydride.

Among the cumarone-based resins, the cumarone indene resin is preferable. The cumarone indene resin is a resin containing cumarone and indene as monomer components constituting the skeleton (main chain) of the resin. Examples of the monomer component contained in the skeleton other than cumarone and indene include styrene, α-methylstyrene, methylindene, and vinyltoluene.

The content of the coumarone-indene resin is, for example, more than 1.0 parts by mass and less than 50.0 parts by mass with respect to 100 parts by mass of the rubber component.

The hydroxyl value (OH value) of the cumarone indene resin is, for example, more than 15 mgKOH/g and less than 150 mgKOH/g. The OH value is the amount of potassium hydroxide required to neutralize acetic acid bonded to a hydroxyl group when acetylating 1 g of the resin, and is expressed in milligrams. The OH value is a value measured by a potentiometric titration (JIS K 0070: 1992).

The softening point of the cumarone indene resin is, for example, more than 30°C and less than 160°C. The softening point is the temperature at which the ball drops when the softening point defined in JIS K 6220-1: 2001 is measured by a ring-ball type softening point measuring device.

Examples of the terpene-based resin include polyterpenes, terpene phenols, and aromatic-modified terpene resins. Polyterpenes are resins obtained by polymerizing terpene compounds, and their hydrogenated products. Terpene compounds are hydrocarbons represented by a composition of $(C_5H_8)_n$ and their oxygenated derivatives, and are compounds having a terpene, classified in monoterpenes ($C_{10}H_{16}$), sesquiterpene ($C_{15}H_{24}$), diterpenes ($C_{20}H_{32}$), etc., as a basic skeleton. Examples thereof include α-pinene, β-pinene, dipentene, limonene, myrcene, aloossimen, ocimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins, such as α-pinene resin, β-pinene resin, limonene resin, dipentene resin, and β-pinene/limonene resin, made from the above-mentioned terpene compound, and hydrogenated terpene resin obtained by hydrogenating the terpene resin can also be mentioned as an example. Examples of the terpene phenol include a resin obtained by copolymerizing the above-mentioned terpene compound and a phenol-based compound, and a resin obtained by hydrogenating the resin. Specifically, a resin obtained by condensing the above-mentioned terpene compound, phenolic compound and the formalin can be mentioned. Examples of the phenolic compound include phenol, bisphenol A, cresol, xylenol and the like. Examples of the aromatic-modified terpene resin include a resin obtained by modifying the terpene resin with an aromatic compound, and a resin obtained by hydrogenating

the resin. The aromatic compound is not particularly limited as long as it has an aromatic ring, but for example, phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthol; styrene derivatives such as styrene, alkylstyrene, alkoxystyrene, and unsaturated hydrocarbon group-containing styrene; cumarone; inden; and the like can be mentioned.

The "C5 resin" refers to a resin obtained by polymerizing a C5 fraction. Examples of the C5 fraction include petroleum fractions having 4 to 5 carbon atoms equivalent to cyclopentadiene, pentene, pentadiene, isoprene, and the like. As the C5 petroleum resin, a dicyclopentadiene resin (DCPD resin) is preferably used.

The "C9 resin" refers to a resin obtained by polymerizing a C9 fraction, and may be hydrogenated or modified. Examples of the C9 fraction include petroleum fractions having 8 to 10 carbon atoms equivalent to vinyltoluene, alkylstyrene, indene, methyl indene and the like. As a specific example, a cumarone indene resin, a cumarone resin, an indene resin, and an aromatic vinyl-based resin are preferably used. As the aromatic vinyl resin, a homopolymer of α-methylstyrene or styrene or a copolymer of α-methylstyrene and styrene is preferable because it is economical, easy to process, and has excellent heat generation. A copolymer of α-methylstyrene and styrene is more preferable. As the aromatic vinyl resin, for example, those commercially available from Clayton, Eastman Chemical, etc. can be used.

The "C5C9 resin" refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA, etc. can be used.

The acrylic resin is not particularly limited. For example, a solvent-free acrylic resin can be used.

As the solvent-free acrylic resin, a (meth) acrylic resin (polymer), synthesized by a high-temperature continuous polymerization method (high-temperature continuous lump polymerization method) described in USP4,414,370, JP-A-S59-6207, JP-B-H5-58005, JP-A-H1-313522, USP5,010,166, Toagosei Annual Report TREND2000 No. 3, pp42-45, etc. without using polymerization initiators, chain transfer agents, organic solvents, etc. as auxiliary raw materials as much as possible, can be mentioned. Note that, "(meth) acrylic" means meth acrylic and acrylic in the present disclosure.

Examples of the monomer component constituting the acrylic resin include (meta) acrylic acid derivatives such as (meth) acrylic acid, (meth) acrylic acid ester (alkyl ester, aryl ester, aralkyl ester, etc.), (meth) acrylamide, and (meth) acrylamide derivative.

As the monomer component constituting the acrylic resin, aromatic vinyl such as styrene, α-methylstyrene, vinyltoluene, vinylnaphthalene, divinylbenzene, trivinylbenzene, divinylnaphthalene, and the like can be used, together with (meth) acrylic acid and/or (meth) acrylic acid derivative.

The acrylic resin may be a resin composed of only a (meth) acrylic component or a resin also having a component other than the (meth) acrylic component as a component. The acrylic resin may have a hydroxyl group, a carboxyl group, a silanol group or the like.

As the resin component, for example, products of Maruzen Petrochemical Co., Ltd., Sumitomo Bakelite Co., Ltd., Yasuhara Chemical Co., Ltd., Toso Co., Ltd., Rutgers Chemicals Co., Ltd., BASF, Arizona Chemical Co., Ltd., Nitto Chemical Co., Ltd., Co., Ltd, Nippon Catalyst, JX Energy Co., Ltd., Arakawa Chemical Industry Co., Ltd., or Taoka Chemical Industry Co., Ltd. can be used.

(b-4) Organic acid cobalt

The rubber composition preferably contains organic acid cobalt. Since the organic acid cobalt plays a role of cross-linking the cord and the rubber, the adhesion between the cord and the rubber can be improved by contaning this component.

Examples of organic acid cobalt include cobalt stearate, cobalt naphthenate, cobalt neodecanoate, and cobalt boron-3 neodecanoate.

The content of the organic acid cobalt is preferably 500 ppm or more, more preferably 700 ppm or more, and further preferably 900 ppm or more as the cobalt concentration in the rubber composition. On the other hand, it is preferably 1500 ppm or less, more preferably 1300 ppm or less. If the amount is too small, there is a risk that sufficient adhesion between the plated layer of the steel cord and the rubber cannot be ensured. On the other hand, if it is too large, the oxidation deterioration of the rubber becomes remarkable, and there is a possibility that the breaking properties deteriorate.

(b-5) Anti-reversion agent

The rubber composition preferably contains a reversion inhibitor as necessary. This suppresses reversion and improves durability. The content of the anti-reversion agent is preferably 0.1 parts by mass or more and 3 parts by mass or less, more preferably 0.2 parts by mass or more and 2.5 parts by mass or less, and further preferably 0.3 parts by mass or more and 2 parts by mass or less with respect to 100 parts by mass of the rubber component. As a specific anti-reversion

agent, for example, Parkalink 900 (1,3-bis(citraconimidomethyl)benzene) manufactured by Flexsys can be used.

(b-6) Anti-aging agent

The rubber composition preferably contains an anti-aging agent. The content of the anti-aging agent is, for example, more than 1 part by mass and less than 10 parts by mass with respect to 100 parts by mass of the rubber component.

Examples of the anti-aging agent include naphthylamine-based anti-aging agents such as phenyl-α-naphthylamine; diphenylamine-based anti-aging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N, N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, and styrenated phenol; and bis, tris, polyphenolic anti-aging agent such as tetrakis-[methylene-3-(3',5'-di-t-butyl-4'-hydroxyphenyl) propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(b-7) stearic acid

The rubber composition may contain stearic acid. The content of stearic acid is, for example, more than 0.5 parts by mass and less than 10.0 parts by mass with respect to 100 parts by mass of the rubber component. As the stearic acid, conventionally known ones can be used, and for example, products of NOF Corporation, Kao Corporation, Fujifilm Wako Pure Chemical Industries, Ltd., or Chiba Fatty Acid Co., Ltd. can be used.

(b-8) Zinc oxide

The rubber composition may contain zinc oxide. The content of zinc oxide is, for example, more than 0.5 parts by mass and less than 15 parts by mass with respect to 100 parts by mass of the rubber component. Conventionally known zinc oxide can be used. For example, products of Mitsui Mining & Smelting Co., Ltd., Toho Zinc Co., Ltd., HakusuiTech Co., Ltd., Shodo Chemical Industry Co., Ltd., Sakai Chemical Industry Co., Ltd., etc. can be used.

(b-9) Cross-linking agent and vulcanization accelerator

The rubber composition preferably contains a cross-linking agent such as sulfur. The content of the cross-linking agent is, for example, more than 0.1 part by mass and less than 10.0 parts by mass with respect to 100 parts by mass of the rubber component.

Examples of sulfur include powdered sulfur, precipitated sulfur, colloidal sulfur, insoluble sulfur, highly dispersible sulfur and soluble sulfur, which are commonly used in the rubber industry. These may be used alone or in combination of two or more.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Industry Co., Ltd., Hosoi Chemical Industry Co., Ltd., etc. can be used.

Examples of the cross-linking agent other than sulfur include a vulcanizing agent containing a sulfur atom such as Tackylol V200 manufactured by Taoka Chemical Industry Co., Ltd., Duralink HTS (1,6-hexamethylene-sodium dithiosulfate dihydrate) manufactured by Flexsys and KA9188 (1,6-bis (N, N'-dibenzylthiocarbamoyldithio) hexane) manufactured by Lanxess; and an organic peroxide such as dicumyl peroxide.

The rubber composition preferably contains a vulcanization accelerator. The content of the vulcanization accelerator is, for example, more than 0.3 parts by mass and less than 10.0 parts by mass with respect to 100 parts by mass of the rubber component.

Examples of the vulcanization accelerator include thiazole-based vulcanization accelerator such as 2-mercaptobenzothiazole, di-2-benzothiazolyldisulfide, and N-cyclohexyl-2-benzothiazylsulfenamide; thiuram-based vulcanization accelerators such as tetramethylthiuram disulfide (TMTD), tetrabenzyl thiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N, N'-diisopropyl-2-benzothiazolesulfenamide; and guanidine-based vulcanization accelerators such as diphenylguanidine, dioltotrilguanidine, and orthotrilbiguanidine can be mentioned. These may be used alone or in combination of

two or more.

(b-10) Other

In addition to the above components, the rubber composition may further contain additives commonly used in the tire industry, for example, fatty acid metal salts, carboxylic acid metal salts, organic peroxides, and the like. The content of these additives is, for example, more than 0.1 parts by mass and less than 200 parts by mass with respect to 100 parts by mass of the rubber component.

(2) Production of rubber composition

The rubber composition is produced by a general method, for example, by a manufacturing method including a base kneading step of kneading a rubber component with a filler such as carbon black, and a finish kneading step of kneading the kneaded product obtained in the base kneading step and a cross-linking agent.
The kneading can be performed using, for example, a known (sealed) kneader such as a Banbury mixer, a kneader, or an open roll.
The kneading temperature of the base kneading step is, for example, more than 50°C and less than 200°C, and the kneading time is, for example, more than 30 seconds and less than 30 minutes. In the base kneading step, in addition to the above components, compounding agents conventionally used in the rubber industry, such as softeners including oil, stearic acid, zinc oxide, antiaging agents, waxes, vulcanization accelerators, etc., may be appropriately added and knead as needed.
In the finish kneading step, the kneaded product obtained in the base kneading step and the cross-linking agent are kneaded. The kneading temperature in the finish kneading step is, for example, more than room temperature and less than 80°C, and the kneading time is, for example, more than 1 minute and less than 15 minutes. In the finish kneading step, in addition to the above components, a vulcanization accelerator, zinc oxide and the like may be appropriately added and kneaded as needed.

2. Manufacture of belt members

The belt member can be produced by topping the obtained rubber composition on both sides of reinforcing cords (monofilament cords such as steel cords) arranged in parallel at predetermined intervals (50 cords/5 cm or more).

3. Manufacture of tires

The tire of the present invention can be produced as an unvulcanized tire by molding the belt member obtained above together with other tire members by a usual method on a tire building machine.
Specifically, the inner liner as a member to ensure the airtightness of the tire, the carcass as a member to withstand the load, impact and filling air pressure received by the tire, a belt member as a member to strongly tighten the carcass to increase the rigidity of the tread, and the like are wound on a molded drum, then both ends of the carcass are fixed to both side edges and a bead part as a member for fixing the tire to the rim is arranged to form a toroid shape, followed by pasting a tread to the central portion of the outer circumference and a sidewall to the outer side in the radial direction to form a side portion; and an unvulcanized tire is manufactured.
In the present embodiment, as described above, the belt layer may be provided in a plurality of layers from the viewpoint of increasing the binding force to the tread during running and facilitating suppression of the growth of the outer diameter. At this time, the average distance D (mm) between the cords of the belt layers in the tread portion of the vulcanized tire is preferably 0.5 mm or less. It is preferable that the angle between the monofilament cords in the tread portion and a straight line parallel to the tire circumferential direction is 10° or more and 35° or less, and the cords of adjacent belt layers are arranged so as to intersect each other.
The angle of the steel cord is the angle of the steel cord with respect to the tire circumferential direction when the tire is not filled with air, and can be confirmed by peeling off the tread portion from the radially outer side of the tire.
Then, the produced unvulcanized tire is heated and pressurized in a vulcanizer to obtain a tire. The vulcanization step can be carried out by applying a known vulcanization means. The vulcanization temperature is, for example, higher than 120°C and lower than 200°C, and the vulcanization time is, for example, more than 5 minutes and less than 15 minutes.
At this time, the tire is molded so as to satisfy the above-described (formula 1) and (formula 2) when installed on a standardized rim and having an internal pressure of 250 kPa.
Specific tires to which the present invention is preferably applied include, for example, 145/60R18, 145/60R19, 155/55R18, 155/55R19, 155/70R17, 155/70R19, 165/55R20, 165/55R21, 165/60R19, 165/65R19, 165/70R18,

175/55R19, 175/55R20, 175/55R22, 175/60R18, 185/55R19, 185/60R20, 195/50R20, and 195/55R20.

The tire of the present embodiment can be used as various types of tires classified into passenger car tires, truck and bus tires, motorcycle tires, etc. However, it is preferable to apply it to a passenger car tire, that is, a tire mounted on a four-wheeled vehicle and having a maximum load capacity of 1000 kg or less, among tires which satisfy (formula 1) and (formula 2). By satisfying (formula 1) and (formula 2), the tires can contribute more favorably for solving the problem in the present disclosure, that is, a pneumatic tire which is sufficiently designed to achieve both low rolling resistance and noise performance at the same time is provided.

The above-mentioned maximum load capacity is a value about 50 to 100 kg smaller than the maximum load capacity defined for each tire in the standard system including the standard on which the tire is based, for example, the maximum load capacity based on the load index (LI) defined by the JATMA standard (Japan Automobile Tire Manufacturers Association standard). Specifically, it is calculated using the following two formulas based on the tire section width Wt (mm), the tire section height Ht (mm) and the tire outer diameter Dt (mm) when the tire is installed on a standardized rim, the internal pressure is set to 250 kPa, and no load is applied.

$$V\ (mm^3) = \{(Dt/2)^2 - (Dt/2\text{-}Ht)^2\} \times \pi \times Wt$$

$$WL\ (kg) = 0.000011 \times V + 175$$

Note that V is the volume of the space occupied by the tire (virtual volume), and (Dt/2 - Ht) is the rim diameter (mm).

The above maximum load capacity is not particularly limited as long as it is 1000 kg or less, but generally, as the maximum load capacity increases, the tire weight tends to increase and the impact transmitted to the tire tends to increase, so it is preferably 900 kg or less, more preferably 800 kg or less, and further preferably 700 kg or less.

Here, the tire weight is preferably 20 kg or less, more preferably 15 kg or less, and further preferably 12 kg or less, 10 kg or less, 8 kg or less, from the viewpoint of softening the impact transmitted to the tire. The term "tire weight" as used herein refers to the weight of the entire tire, including sealants, sponges, three-dimensional mesh structures, electronic parts, etc., if they are provided on the inner cavity surface of the tire. Moreover, the tire weight can be appropriately adjusted by the thickness and width of each member constituting the tire, the specific gravity of the rubber composition, the number of steel cords arranged in the belt reinforcing layer, the structure of the bead wires, and the like.

[EXAMPLES]

Hereinafter, the present invention will be described more specifically by examples.

1. Manufacture of rubber compositions for belts

First, a rubber composition for belts was produced.

(1) Compounding material

First, each compounding material shown below was prepared.

(a) Rubber component
NR: RSS3
(b) Compounding materials other than rubber components

(b-1) Carbon Black-1: Show Black N326 manufactured by Cabot Japan Co., Ltd. ($N_2SA$: 78$m^2$/g)
(b-2) Carbon Black-2: Show Black N550 manufactured by Cabot Japan Co., Ltd. ($N_2SA$: 42$m^2$/g)
(b-3) Curable resin component-1: PR12686 manufactured by Sumitomo Bakelite Co., Ltd. (Cashew oil-modified phenolic resin)
(b-4) Curable resin component-2: Sumikanol 620 manufactured by Taoka Chemical Industry Co., Ltd. (Modified resorcinol resin)
(b-5) Curing agent: Sumikanol 507 manufactured by Taoka Chemical Industry Co., Ltd.
(methylene donor)
(b-6) Cobalt organic acid: DICNATE NBC-2 manufactured by DIC Corporation
(Boron cobalt neodecanoate, cobalt content: 22.5% by mass)
(b-7) Zinc oxide: Zinc oxide No. 1 manufactured by Mitsui Mining & Smelting Co., Ltd.

(b-8) Anti-aging agent-1: Nocrack 6C manufactured by Ouchi Shinko Chemical Industry Co., Ltd. (N-phenyl-N'-(1,3-dimethylbutyl)-p-phenylenediamine)
(b-9) Anti-aging agent -2: Antage RD manufactured by Kawaguchi Chemical Industry Co., Ltd. (2,2,4-trimethyl-1,2-dihydroquinoline)
(b-10) Stearic acid: Stearic acid "Tsubaki" manufactured by NOF Corporation
(b-11) Cross-linking agent, vulcanization accelerator, cross-linking aid

Sulfur: Powdered sulfur manufactured by Tsurumi Chemical Industry Co., Ltd.
Vulcanization accelerator: NOCCELER NS-P (NS) manufactured by Ouchi Shinko Chemical Industry Co., Ltd.
(N-tert-butyl-2-benzothiazolylsulfenamide)
Crosslinking aid: Duralink HTS manufactured by Flexsys

(2) Manufacture of rubber composition

Materials other than the curing agent, sulfur and vulcanization accelerator were kneaded at 150°C for 5 minutes using a Banbury mixer according to the formulation contents shown in Tables 1 to 4 to obtain a kneaded product. Each compounding quantity is a mass part.

Next, a curing agent, sulfur and a vulcanization accelerator were added to the resulting kneaded product, and the mixture was kneaded at 80°C for 5 minutes using an open roll to obtain a rubber composition for belts.

2. Manufacture of tires

First, steel cords having the configurations and cord outer diameters (mm) shown in Tables 1 to 4 were arranged with the ends (cords/5 cm) shown in Tables 1 to 4, and then the previously obtained belt rubber composition was coated on the both sides to prepare a belt member. At this time, the same amount of rubber was topped on the top and bottom so that the steel cord was arranged in the center of the thickness direction of the belt member; and the thickness was appropriately adjusted so that the steel cord between one set of belt layers has an average distance D (mm) shown in Tables 1 to 4 in the tire after vulcanization.

After that, two layers of the belt member are pasted together with other tire members so that the steel cords in the belt member intersect each other at the angles shown in Tables 1 to 4 with respect to a straight line parallel to the tire circumferential direction to form an unvulcanized tire. Then, the unvulcanized tire was press vulcanized for 10 minutes at 170°C to produce test tires having sizes and weights shown in Tables 1 to 4. Tables 1 and 2 describe tires having a tire cross-sectional width Wt of more than 200 mm (Examples 1-1 to 1-12 and Comparative Examples 1-1 to 1-7), and Tables 3 and 4 describe tires having a tire cross-sectional width Wt of 200 mm or less (Examples 2-1 to 2-12 and Comparative Examples 2-1 to 2-7).

In each test tire, the above-mentioned ($L_{80}$ /$L_0$) was 0.5, the total cross-sectional area of the circumferential grooves was 22% of the cross-sectional area of the tread portion, and the total volume of the lateral grooves, including lateral grooves having the groove width/groove depth of 0.65, was 3.5% of the tread volume.

3. Calculation of parameters

After that, the cross-sectional width Wt (mm) of each test tire was obtained, and "0.31Wt + 14.35" and "0.31Wt + 56.45" were calculated. Then, the average distance L (mm) between the two adjacent steel cords was calculated based on the cord outer diameter (mm) and the ends e (cords/5 cm) of the two adjacent steel cords.

At the same time, the rubber composition was cut out from between the belt layers of each test tire to prepare a rubber test piece for viscoelasticity measurement having a length of 40 mm and a width of 4 mm; and tan δ was measured under the conditions of temperature of 70°C, initial strain of 5%, dynamic strain of ±1%, frequency of 10 Hz, and deformation mode: tension using Eplexor series manufactured by GABO. Tables 1 to 4 show the distance between the cords of the band and the belt and between the belts. For those using the same rubber composition, the viscoelasticity of the rubber composition was measured from each specification, the average value was obtained and the result is shown.

Then, using the obtained results, "L × tan δ", "e/ (0.31Wt + 14.35)", and "e/ (0.31Wt + 56.45)" were calculated. Further, for each test tire shown in Tables 3 and 4 having a tire cross-sectional width Wt of less than 200 mm, "e/ (0.1924Wt + 37.88)" and "e/ (0.1335Wt + 49.644) " was also calculated. The results are shown in Tables 1-4.

4. Performance evaluation test

(1) Evaluation of rolling resistance at high-speed running

Each test tire was installed on all wheels of the vehicle (domestic FF vehicle, displacement 2000cc), filled with air so that the internal pressure became 250kPa, and then driven on the test course on the dry road surface at a speed of 100km/h. After making a 10km lap, the accelerator was released, and the distance from when the accelerator was turned off until the vehicle stopped was measured as the rolling resistance.
Next, the results in Comparative Example 1-7 in Tables 1 and 2, and the results of Comparative Examples 2-7 in Tables 3 and 4 were set to as 100, and the results were indexed based on the following formula to relatively evaluate the rolling resistance. The larger the value, the longer the distance from when the accelerator is turned off until the vehicle stops and the smaller the rolling resistance in the steady state, and showing excellent fuel efficiency.

Rolling resistance

= [(Result of test tire) / (Result of Comparative Example 1-7 or Comparative Example 2-7)] × 100

(2) Evaluation of noise performance at high-speed running

Each test tire installed on all wheels of a vehicle (domestic FF vehicle, displacement 2000cc), run on a dry road test course at a speed of 100km/h, and the driver sensory evaluates the noise at the window in 5 stages.
After summing the ratings of 20 drivers,
the results of Comparative Examples 1-4 in Tables 1 and 2 and the results of Comparative Examples 2-4 in Tables 3 and 4 were indexed as 100 and evaluated by its reciprocal. A higher value indicates better noise performance at high-speed running.

Noise performance =

[(Results of Comparative Example 1-4 or Comparative Example 2-4) / (Test Tire Results)] × 100

(3) Comprehensive evaluation

The evaluation results of (1) and (2) above were summed up to obtain a comprehensive evaluation.

(4) Evaluation results

The results of each evaluation are shown in Tables 1-4.

[Table 1]

| | | Example No. | | | | | |
|---|---|---|---|---|---|---|---|
| | | 1-1 | 1-2 | 1-3 | 1-4 | 1-5 | 1-6 |
| Size | | 205/ 55R16 | 205/ 55R16 | 205/ 55R16 | 205/ 55R16 | 205/ 55R16 | 205/5 5R16 |
| Weight (kg) | | 7.2 | 7.2 | 7.1 | 7.2 | 7.2 | 7.5 |
| | NR | 100 | 100 | 100 | 100 | 100 | 100 |
| | Carbon black-1 | | | | | | |
| | Carbon black-2 | 55 | 55 | 55 | 55 | 55 | 55 |
| | Cross-linking aid | 0.5 | 0.5 | 0.5 | 0.5 | 0.5 | 0.5 |
| | Curable resin compo-nent -1 | | | | | | |

(continued)

| | | Example No. | | | | | |
|---|---|---|---|---|---|---|---|
| | | 1-1 | 1-2 | 1-3 | 1-4 | 1-5 | 1-6 |
| Formulation | Curable resin component -2 | 3 | 3 | 3 | 3 | 3 | 3 |
| | Organic acid cobalt | 1.5 | 1.5 | 1.5 | 1.5 | 1.5 | 1.5 |
| | Zinc oxide | 10 | 10 | 10 | 10 | 10 | 10 |
| | Antiaging agent-1 | 1 | 1 | 1 | 1 | 1 | 1 |
| | Antiaging agent-2 | 0.5 | 0.5 | 0.5 | 0.5 | 0.5 | 0.5 |
| | Stearic acid | 1 | 1 | 1 | 1 | 1 | 1 |
| | Sulfur | 7 | 7 | 7 | 7 | 7 | 7 |
| | Curing agent | 1.5 | 1.5 | 1.5 | 1.5 | 1.5 | 1.5 |
| | Vulcanization accelerator | 0.9 | 0.9 | 0.9 | 0.9 | 0.9 | 0.9 |
| Code | Composition | 1×1 | 1×1 | 1×1 | 1×1 | 1×1 | 1×1 |
| | Outer diameter(mm) | 0.3 | 0.3 | 0.3 | 0.3 | 0.3 | 0.3 |
| | Ends e (codes/5cm) | 82 | 82 | 82 | 82 | 82 | 95 |
| Belt layer | Average distance D(mm) | 0.7 | 0.7 | 0.7 | 0.45 | 0.22 | 0.22 |
| | Angle (°) | 40 | 30 | 23 | 23 | 23 | 23 |
| Parameter | tan δ | 0.07 | 0.07 | 0.07 | 0.07 | 0.07 | 0.07 |
| | Wt (mm) | 208 | 209 | 207 | 208 | 207 | 206 |
| | 0.31×Wt+14.35 | 78.8 | 79.1 | 78.5 | 78.8 | 78.5 | 78.2 |
| | 0.31×Wt+56.45 | 120.9 | 121.2 | 120.6 | 120.9 | 120.6 | 120.3 |
| | L×tanδ | 0.022 | 0.022 | 0.022 | 0.022 | 0.022 | 0.016 |
| | e/(0.31×Wt+14.35) | 1.04 | 1.04 | 1.04 | 1.04 | 1.04 | 1.21 |
| | e/(0.31×Wt+56.45) | 0.68 | 0.68 | 0.68 | 0.68 | 0.68 | 0.79 |
| Evaluation results | Rolling resistance at high-speed running | 108 | 115 | 120 | 127 | 133 | 138 |
| | Noise performance at high-speed running | 107 | 111 | 115 | 120 | 125 | 122 |
| | TOTAL | 215 | 226 | 235 | 247 | 258 | 260 |

--continued

| | | Example No. | | | | | |
|---|---|---|---|---|---|---|---|
| | | 1-7 | 1-8 | 1-9 | 1-10 | 1-11 | 1-12 |
| Size | | 195/6 5R15 | 195/6 5R15 | 195/6 5R15 | 225/5 0R16 | 225/5 0R16 | 225/5 0R16 |
| Weight (kg) | | 7.0 | 7.2 | 7.2 | 7.7 | 7.9 | 7.9 |
| Formulation | NR | 100 | 100 | 100 | 100 | 100 | 100 |
| | Carbon black-1 | | | 60 | | 60 | 65 |
| | Carbon black-2 | 55 | 55 | | 55 | | |
| | Cross-linking aid | 0.5 | 0.5 | 0.5 | 0.5 | 0.5 | 0.5 |
| | Curable resin component -1 | | | 3 | | 3 | 3 |
| | Curable resin component -2 | 3 | 3 | | 3 | | |
| | Organic acid cobalt | 1.5 | 1.5 | 1.5 | 1.5 | 1.5 | 1.5 |
| | Zinc oxide | 10 | 10 | 10 | 10 | 10 | 10 |
| | Antiaging agent-1 | 1 | 1 | 1 | 1 | 1 | 1 |
| | Antiaging agent-2 | 0.5 | 0.5 | 0.5 | 0.5 | 0.5 | 0.5 |
| | Stearic acid | 1 | 1 | 1 | 1 | 1 | 1 |
| | Sulfur | 7 | 7 | 7 | 7 | 7 | 5.5 |
| | Curing agent | 1.5 | 1.5 | 1.5 | 1.5 | 1.5 | 1.5 |
| | Vulcanization accelerator | 0.9 | 0.9 | 0.9 | 0.9 | 0.9 | 0.9 |
| Code | Composition | 1×1 | 1×1 | 1×1 | 1×1 | 1×1 | 1×1 |
| | Outer diameter(mm) | 0.3 | 0.3 | 0.3 | 0.3 | 0.3 | 0.3 |
| | Ends e (codes /5cm) | 82 | 95 | 95 | 95 | 120 | 120 |
| Belt layer | Average distance D(mm) | 0.45 | 0.45 | 0.45 | 0.45 | 0.45 | 0.45 |
| | Angle (°) | 23 | 23 | 23 | 23 | 23 | 23 |

(continued)

| | | Example No. | | | | | |
|---|---|---|---|---|---|---|---|
| | | 1-7 | 1-8 | 1-9 | 1-10 | 1-11 | 1-12 |
| Parameter | tan δ | 0.07 | 0.07 | 0.12 | 0.07 | 0.12 | 0.15 |
| | Wt (mm) | 201 | 202 | 201 | 228 | 229 | 227 |
| | 0.31×Wt+14.35 | 76.7 | 77.0 | 76.7 | 85.0 | 85.3 | 84.7 |
| | 0.31×Wt+56.45 | 118.8 | 119.1 | 118.8 | 127.1 | 127.4 | 126.8 |
| | L×tanδ | 0.022 | 0.016 | 0.027 | 0.016 | 0.014 | 0.018 |
| | e/(0.31×Wt+14.35) | 1.07 | 1.23 | 1.24 | 1.12 | 1.41 | 1.42 |
| | e/(0.31×Wt+56.45) | 0.69 | 0.80 | 0.80 | 0.75 | 0.94 | 0.95 |
| Evaluation results | Rolling resistance at high-speed running | 135 | 142 | 140 | 136 | 144 | 140 |
| | Noise performance at high-speed running | 124 | 128 | 135 | 120 | 137 | 140 |
| | TOTAL | 259 | 270 | 275 | 256 | 281 | 280 |

[Table 2]

| | | Comparative example No. | | | | | | |
|---|---|---|---|---|---|---|---|---|
| | | 1-1 | 1-2 | 1-3 | 1-4 | 1-5 | 1-6 | 1-7 |
| Size | | 205/5 5R16 | 205/5 5R16 | 205/5 5R16 | 205/5 5R16 | 205/5 5R16 | 205/5 5R16 | 205/5 5R16 |
| Weight (kg) | | 7.2 | 7.5 | 7.8 | 7.0 | 7.4 | 7.1 | 7.2 |
| Formulation | NR | 100 | 100 | 100 | 100 | 100 | 100 | 100 |
| | Carbon black-1 | | | | | | | |
| | Carbon black-2 | 55 | 55 | 55 | 55 | 55 | 55 | 55 |
| | Crosslinking aid | 0.5 | 0.5 | 0.5 | 0.5 | 0.5 | 0.5 | 0.5 |
| | Curable resin component-1 | | | | | | | |
| | Curable resin component-2 | 3 | 3 | 3 | 3 | 3 | 3 | 3 |
| | Organic acid cobalt | 1.5 | 1.5 | 1.5 | 1.5 | 1.5 | 1.5 | 1.5 |
| | Zinc oxide | 10 | 10 | 10 | 10 | 10 | 10 | 10 |
| | Antiaging agent-1 | 1 | 1 | 1 | 1 | 1 | 1 | 1 |
| | Antiaging agent-2 | 0.5 | 0.5 | 0.5 | 0.5 | 0.5 | 0.5 | 0.5 |
| | Stearic acid | 1 | 1 | 1 | 1 | 1 | 1 | 1 |
| | Sulfur | 7 | 7 | 7 | 7 | 7 | 7 | 7 |
| | Curing agent | 1.5 | 1.5 | 1.5 | 1.5 | 1.5 | 1.5 | 1.5 |
| | Vulcanization accelerator | 0.9 | 0.9 | 0.9 | 0.9 | 0.9 | 0.9 | 0.9 |
| Code | Composition | 1×2 | 1×2 | 1×2 | 1×1 | 1×1 | 1×1 | 1×1 |
| | Outer diameter(mm) | 0.59 | 0.59 | 0.59 | 0.59 | 0.3 | 0.3 | 0.3 |
| | Ends e (codes/5cm) | 42 | 82 | 130 | 42 | 130 | 42 | 42 |
| Belt layer | Average distance D(mm) | 0.7 | 0.7 | 0.7 | 0.7 | 0.7 | 0.7 | 0.45 |
| | Angle (°) | 40 | 40 | 40 | 40 | 40 | 30 | 30 |

(continued)

| | | Comparative example No. | | | | | | |
|---|---|---|---|---|---|---|---|---|
| | | 1-1 | 1-2 | 1-3 | 1-4 | 1-5 | 1-6 | 1-7 |
| Parameter | tanδ | 0.07 | 0.07 | 0.07 | 0.07 | 0.07 | 0.07 | 0.07 |
| | Wt (mm) | 208 | 209 | 208 | 207 | 208 | 209 | 205 |
| | 0.31×Wt+14.35 | 78.8 | 79.1 | 78.8 | 78.5 | 78.8 | 79.1 | 77.9 |
| | 0.31×Wt+56.45 | 120.9 | 121.2 | 120.9 | 120.6 | 120.9 | 121.2 | 120.0 |
| | L×tanδ | 0.043 | 0.001 | -0.014 | 0.043 | 0.006 | 0.064 | 0.064 |
| | e/(0.31×Wt+14.35) | 0.53 | 1.04 | 1.65 | 0.53 | 1.65 | 0.53 | 0.54 |
| | e/(0.31×Wt+56.45) | 0.35 | 0.68 | 1.08 | 0.35 | 1.08 | 0.35 | 0.35 |
| Evaluation results | Rolling resistance at high-speed running | 94 | 90 | 85 | 92 | 92 | 96 | 100 |
| | Noise performance at high-speed running | 95 | 88 | 84 | 100 | 90 | 92 | 95 |
| | TOTAL | 190 | 177 | 169 | 192 | 183 | 188 | 195 |

[Table 3]

| | | Example No. | | | | | |
|---|---|---|---|---|---|---|---|
| | | 2-1 | 2-2 | 2-3 | 2-4 | 2-5 | 2-6 |
| Size | | 185/4 5R15 | 185/4 5R15 | 185/4 5R15 | 185/4 5R15 | 185/4 5R15 | 185/4 5R15 |
| Weight (kg) | | 5.8 | 5.8 | 5.8 | 5.9 | 5.8 | 5.9 |
| Formulation | NR | 100 | 100 | 100 | 100 | 100 | 100 |
| | Carbon black-1 | | | | | | |
| | Carbon black-2 | 55 | 55 | 55 | 55 | 55 | 55 |
| | Cross-linking aid | 0.5 | 0.5 | 0.5 | 0.5 | 0.5 | 0.5 |
| | Curable resin component-1 | | | | | | |
| | Curable resin component-2 | 3 | 3 | 3 | 3 | 3 | 3 |
| | Organic acid cobalt | 1.5 | 1.5 | 1.5 | 1.5 | 1.5 | 1.5 |
| | Zinc oxide | 10 | 10 | 10 | 10 | 10 | 10 |
| | Antiaging agent-1 | 1 | 1 | 1 | 1 | 1 | 1 |
| | Antiaging agent-2 | 0.5 | 0.5 | 0.5 | 0.5 | 0.5 | 0.5 |
| | Stearic acid | 1 | 1 | 1 | 1 | 1 | 1 |
| | Sulfur | 7 | 7 | 7 | 7 | 7 | 7 |
| | Curing agent | 1.5 | 1.5 | 1.5 | 1.5 | 1.5 | 1.5 |
| | Vulcanization accelerator | 0.9 | 0.9 | 0.9 | 0.9 | 0.9 | 0.9 |
| Code | Composition | 1×1 | 1×1 | 1×1 | 1×1 | 1×1 | 1×1 |
| | Outer diameter(mm) | 0.3 | 0.3 | 0.3 | 0.3 | 0.3 | 0.3 |
| | Ends e (codes/5cm) | 72 | 72 | 72 | 72 | 72 | 75 |
| Belt layer | Average distance D(mm) | 0.7 | 0.7 | 0.7 | 0.45 | 0.22 | 0.22 |
| | Angle (°) | 40 | 30 | 23 | 23 | 23 | 23 |
| | tan δ | 0.07 | 0.07 | 0.07 | 0.07 | 0.07 | 0.07 |
| | Wt (mm) | 183 | 184 | 183 | 185 | 183 | 184 |
| | 0.31×Wt+14.35 | 71.1 | 71.4 | 71.1 | 71.7 | 71.1 | 71.4 |
| | 0.31×Wt+56.45 | 113.2 | 113.5 | 113.2 | 113.8 | 113.2 | 113.5 |

(continued)

| | | Example No. | | | | | |
|---|---|---|---|---|---|---|---|
| | | 2-1 | 2-2 | 2-3 | 2-4 | 2-5 | 2-6 |
| Parameter | 0.1924×Wt+37.88 | 73.1 | 73.3 | 73.1 | 73.5 | 73.1 | 73.3 |
| | 0.1335×Wt+49.644 | 74.1 | 74.2 | 74.1 | 74.3 | 74.1 | 74.2 |
| | L × tanδ | 0.028 | 0.028 | 0.028 | 0.028 | 0.028 | 0.026 |
| | e/(0.31×Wt+14.35) | 1.01 | 1.01 | 1.01 | 1.00 | 1.01 | 1.05 |
| | e/(0.31×Wt+56.45) | 0.64 | 0.63 | 0.64 | 0.63 | 0.64 | 0.66 |
| | e/(0.1924×Wt+37.88) | 0.99 | 0.98 | 0.99 | 0.98 | 0.99 | 1.02 |
| | e/(0.1335×Wt+49.644) | 0.97 | 0.97 | 0.97 | 0.97 | 0.97 | 1.01 |
| Evaluation results | Rolling resistance at high-speed running | 109 | 116 | 122 | 129 | 132 | 140 |
| | Noise performance at high-speed running | 108 | 112 | 118 | 122 | 124 | 126 |
| | TOTAL | 217 | 228 | 240 | 251 | 256 | 266 |

--continued

| | | Example No. | | | | | |
|---|---|---|---|---|---|---|---|
| | | 2-7 | 2-8 | 2-9 | 2-10 | 2-11 | 2-12 |
| Size | | 185/4 5R15 | 175/5 5R14 | 175/5 5R14 | 165/6 5R13 | 165/6 5R13 | 165/6 5R13 |
| Weight (kg) | | 6.0 | 5.6 | 5.5 | 5.4 | 5.5 | 5.4 |
| Formulation | NR | 100 | 100 | 100 | 100 | 100 | 100 |
| | Carbon black-1 | | | | | | |
| | Carbon black-2 | 55 | 55 | 55 | 55 | 55 | 55 |
| | Cross-linking aid | 0.5 | 0.5 | 0.5 | 0.5 | 0.5 | 0.5 |
| | Curable resin component-1 | | | 3 | | 3 | 3 |
| | Curable resin component-2 | 3 | 3 | | 3 | | |
| | Organic acid cobalt | 1.5 | 1.5 | 1.5 | 1.5 | 1.5 | 1.5 |
| | Zinc oxide | 10 | 10 | 10 | 10 | 10 | 10 |
| | Antiaging agent-1 | 1 | 1 | 1 | 1 | 1 | 1 |
| | Antiaging agent-2 | 0.5 | 0.5 | 0.5 | 0.5 | 0.5 | 0.5 |
| | Stearic acid | 1 | 1 | 1 | 1 | 1 | 1 |
| | Sulfur | 7 | 7 | 7 | 7 | 7 | 5.5 |
| | Curing agent | 1.5 | 1.5 | 1.5 | 1.5 | 1.5 | 1.5 |
| | Vulcanization accelerator | 0.9 | 0.9 | 0.9 | 0.9 | 0.9 | 0.9 |
| Code | Composition | 1×1 | 1×1 | 1×1 | 1×1 | 1×1 | 1×1 |
| | Outer diameter(mm) | 0.3 | 0.3 | 0.3 | 0.3 | 0.3 | 0.3 |
| | Ends e (codes /5cm) | 85 | 72 | 75 | 70 | 72 | 85 |
| Belt layer | Average distance D(mm) | 0.45 | 0.45 | 0.45 | 0.45 | 0.45 | 0.45 |
| | Angle (°) | 23 | 23 | 23 | 23 | 23 | 23 |
| | Tan δ | 0.07 | 0.07 | 0.07 | 0.07 | 0.07 | 0.07 |
| | Wt (mm) | 184 | 174 | 175 | 165 | 166 | 165 |
| | 0.31×Wt+14.35 | 71.4 | 68.3 | 68.6 | 65.5 | 65.8 | 65.5 |
| | 0.31×Wt+56.45 | 113.5 | 110.4 | 110.7 | 107.6 | 107.9 | 107.6 |

(continued)

| | | Example No. | | | | | |
|---|---|---|---|---|---|---|---|
| | | 2-7 | 2-8 | 2-9 | 2-10 | 2-11 | 2-12 |
| Parameter | 0.1924×Wt+37.88 | 73.3 | 71.4 | 71.6 | 69.6 | 69.8 | 69.6 |
| | 0.1335×Wt+49.644 | 74.2 | 72.9 | 73.0 | 71.7 | 71.8 | 71.7 |
| | L×tanδ | 0.020 | 0.028 | 0.026 | 0.029 | 0.028 | 0.020 |
| | e/(0.31×Wt+14.35) | 1.19 | 1.05 | 1.09 | 1.07 | 1.09 | 1.30 |
| | e/(0.31×Wt+56.45) | 0.75 | 0.65 | 0.68 | 0.65 | 0.67 | 0.79 |
| | e/(0.1924×Wt+37.88) | 1.16 | 1.01 | 1.05 | 1.01 | 1.03 | 1.22 |
| | e/(0.1335×Wt+49.644) | 1.15 | 0.99 | 1.03 | 0.98 | 1.00 | 1.19 |
| Evaluation results | Rolling resistance at high-speed running | 145 | 134 | 138 | 136 | 142 | 148 |
| | Noise performance at high-speed running | 129 | 127 | 133 | 129 | 139 | 145 |
| | TOTAL | 274 | 261 | 271 | 265 | 281 | 293 |

[Table 4]

| | | Comparative example No. | | | | | | |
|---|---|---|---|---|---|---|---|---|
| | | 2-1 | 2-2 | 2-3 | 2-4 | 2-5 | 2-6 | 2-7 |
| Size | | 185/4 5R15 | 185/4 5R15 | 185/4 5R15 | 185/4 5R15 | 185/4 5R15 | 185/4 5R15 | 185/4 5R15 |
| Weight (kg) | | 5.8 | 6.0 | 6.2 | 5.8 | 6.2 | 5.7 | 5.8 |
| Formulation | NR | 100 | 100 | 100 | 100 | 100 | 100 | 100 |
| | Carbon black-1 | | | | | | | |
| | Carbon black-2 | 55 | 55 | 55 | 55 | 55 | 55 | 55 |
| | Crosslinking aid | 0.5 | 0.5 | 0.5 | 0.5 | 0.5 | 0.5 | 0.5 |
| | Curable resin component-1 | | | | | | | |
| | Curable resin component-2 | 3 | 3 | 3 | 3 | 3 | 3 | 3 |
| | Organic acid cobalt | 1.5 | 1.5 | 1.5 | 1.5 | 1.5 | 1.5 | 1.5 |
| | Zinc oxide | 10 | 10 | 10 | 10 | 10 | 10 | 10 |
| | Antiaging agent-1 | 1 | 1 | 1 | 1 | 1 | 1 | 1 |
| | Antiaging agent-2 | 0.5 | 0.5 | 0.5 | 0.5 | 0.5 | 0.5 | 0.5 |
| | Stearic acid | 1 | 1 | 1 | 1 | 1 | 1 | 1 |
| | Sulfur | 7 | 7 | 7 | 7 | 7 | 7 | 7 |
| | Curing agent | 1.5 | 1.5 | 1.5 | 1.5 | 1.5 | 1.5 | 1.5 |
| | Vulcanization accelerator | 0.9 | 0.9 | 0.9 | 0.9 | 0.9 | 0.9 | 0.9 |
| Code | Composition | 1×2 | 1×2 | 1×2 | 1×1 | 1×1 | 1×1 | 1×1 |
| | Outer diameter(mm) | 0.59 | 0.59 | 0.59 | 0.59 | 0.3 | 0.3 | 0.3 |
| | Ends e (codes/5cm) | 42 | 72 | 130 | 42 | 130 | 42 | 42 |
| Belt layer | Average distance D(mm) | 0.7 | 0.7 | 0.7 | 0.7 | 0.7 | 0.7 | 0.45 |
| | Angle (°) | 40 | 40 | 40 | 40 | 40 | 30 | 30 |
| | Tan δ | 0.07 | 0.07 | 0.07 | 0.07 | 0.07 | 0.07 | 0.07 |
| | Wt (mm) | 183 | 184 | 185 | 184 | 183 | 184 | 185 |
| | 0.31×Wt+14.35 | 71.1 | 71.4 | 71.7 | 71.4 | 71.1 | 71.4 | 71.7 |
| | 0.31×Wt+56.45 | 113.2 | 113.5 | 113.8 | 113.5 | 113.2 | 113.5 | 113.8 |

(continued)

| | | Comparative example No. | | | | | | |
|---|---|---|---|---|---|---|---|---|
| | | 2-1 | 2-2 | 2-3 | 2-4 | 2-5 | 2-6 | 2-7 |
| Parameter | 0.1924×Wt+37.88 | 73.1 | 73.3 | 73.5 | 73.3 | 73.1 | 73.3 | 73.5 |
| | 0.1335×Wt+49.644 | 74.1 | 74.2 | 74.3 | 74.2 | 74.1 | 74.2 | 74.3 |
| | L×tanδ | 0.043 | 0.007 | -0.014 | 0.043 | 0.006 | 0.064 | 0.064 |
| | e/(0.31×Wt+14.35) | 0.59 | 1.01 | 1.81 | 0.59 | 1.83 | 0.59 | 0.59 |
| | e/(0.31×Wt+56.45) | 0.37 | 0.63 | 1.14 | 0.37 | 1.15 | 0.37 | 0.37 |
| | e/(0.1924×Wt+37.88) | 0.57 | 0.98 | 1.77 | 0.57 | 1.78 | 0.57 | 0.57 |
| | e/(0.1335×Wt+49.644) | 0.57 | 0.97 | 1.75 | 0.57 | 1.75 | 0.57 | 0.56 |
| Evaluation results | Rolling resistance at high-speed running | 95 | 91 | 86 | 93 | 91 | 95 | 100 |
| | Noise performance at high-speed running | 94 | 87 | 83 | 100 | 92 | 93 | 94 |
| | TOTAL | 189 | 178 | 169 | 193 | 183 | 188 | 194 |

From the results shown in Tables 1 to 4, it can be seen a pneumatic tire that satisfactorily achieves both low rolling resistance and noise performance at high-speed running can be obtained, when monofilament cords are used as reinforcing cords, and e/ (0.31Wt + 14.35) > 1 (formula 1) and e/ (0.31Wt + 56.45) < 1 (formula 2) are satisfied.

In addition, it can be seen a pneumatic tire that achieves a better balance of both low rolling resistance and noise performance during high-speed running can be provided, when the number of ends exceeds 80/5 cm, when $L \times \tan\delta > 0.017$ (formula 5) is satisfied, and when the angle formed by the monofilament cord and a straight line parallel to the tire circumferential direction is 10° or more and 35° or less.

Further, when the tire cross-sectional width Wt is less than 200 mm, it can be seen a pneumatic tire that achieves a further better balance of both low rolling resistance and noise performance at high-speed running by satisfying e/ (0. 1924Wt + 37.88) > 1 (formula 3) or e/ (0.1335Wt + 49.644) > 1 (formula 4).

Although the present invention has been described above based on the embodiments, the present invention is not limited to the above embodiments. Various modifications can be made to the above embodiment within the scope of the appended claims.

## Claims

**1.** A pneumatic tire having a tread portion and a belt layer, wherein

the belt layer uses a monofilament cord as a reinforcing cord, and the tire cross-sectional width Wt refers to the width of the tire, obtained by excluding the patterns, letters, etc. on the sidewalls of the tire from the straight-line distance between the sidewalls, including all patterns, letters, etc. on the sidewalls of the tire,
**characterized in that**
the number e of arranged monofilament cords per 5 cm in the tire width direction (cords/5 cm) in the cross section of the belt layer in the tire radial direction, and the tire cross-sectional width Wt (mm) when the tire is installed on a standardized rim and the internal pressure is set to 250 kPa satisfy the following (formula 1) and (formula 2).

$$e / (0.31Wt + 14.35) > 1.09 \qquad \text{(formula 1)}$$

$$e / (0.31Wt + 56.45) < 0.75 \qquad \text{(formula 2)}$$

**2.** The pneumatic tire according to claim 1, wherein the tire cross-sectional width Wt is less than 200 mm, and is **characterized by** satisfying the following (formula 3).

$$e/ (0.1924Wt + 37.88) > 1 \qquad \text{(formula 3)}$$

**3.** The pneumatic tire according to claim 1 or 2, wherein the tire cross-sectional width Wt is less than 200 mm, and is **characterized by** satisfying the following (formula 4).

$$e/ (0.1335Wt+49.644) > 1 \qquad \text{(formula 4)}$$

**4.** The pneumatic tire according to any one of claims 1 to 3, wherein the arrangement number e of the monofilament cords per 5 cm in the tire width direction (cords/5 cm) is more than 80 cords/5 cm.

**5.** The pneumatic tire according to any one of claims 1 to 4, wherein, in the belt layer, the loss tangent ($\tan\delta$), measured under the conditions of temperature of 70°C, initial strain of 5%, dynamic strain of $\pm 1\%$, frequency of 10 Hz, deformation mode: tension, of the rubber composition covering the reinforcing cords and the average distance L (mm) between the two monofilament cords adjacent in the width direction in the tread portion satisfy the following (formula 5).

$$L \times \tan\delta > 0.017 \quad \text{(formula 5)}$$

**6.** The pneumatic tire according to any one of claims 1 to 5, wherein the angle formed by the reinforcing cord of the belt layer and a straight line parallel to the tire circumferential direction is 10 ° or more and 35 ° or less.

7. The pneumatic tire according to any one of claims 1 to 6, wherein at least two belt layers are provided, and at least one pair of belt layers adjacent in the tire radial direction are arranged with distance of 0.5 mm or less.

8. The pneumatic tire according to any one of claims 1 to 7, wherein the cord outer diameter of the monofilament cord is 0.1 mm or more and 0.5 mm or less.

9. The pneumatic tire according to any one of claims 1 to 8, wherein the tread portion has a circumferential groove extending continuously in the tire circumferential direction, and the ratio (L80 / L0) of the groove width L80 at 80% of the maximum depth of the circumferential groove to the groove width L0 of the circumferential groove on the contact surface of the tread portion is 0. 3 or more and 0.7 or less.

10. The pneumatic tire according to any one of claims 1 to 9, wherein the tread portion has a plurality of circumferential grooves extending continuously in the tire circumferential direction, and the total cross-sectional area of the plurality of circumferential grooves is 10% or more and 30% or less of the cross-sectional area of the tread portion.

11. The pneumatic tire according to any one of claims 1 to 10, wherein the tread portion has a plurality of lateral grooves extending in the axial direction of the tire, and the total volume of the plurality of lateral grooves is 2.0% or more and 5.0% or less of the volume of the tread portion.

## Patentansprüche

1. Pneumatischer Reifen, der einen Profilabschnitt und eine Gurtlage hat, wobei

   die Gurtlage einen Monofilamentcord als einen Verstärkungskord verwendet, und
   die Reifenquerschnittsbreite Wt sich auf die Breite des Reifens bezieht, die durch Ausschließen der Muster, Buchstaben, usw. an den Seitenwänden des Reifens von der geradlinigen Entfernung zwischen den Seitenwänden erhalten wird, die alle Muster, Buchstaben, usw. an den Seitenwänden des Reifens umfasst,
   **dadurch gekennzeichnet, dass**
   die Anzahl e angeordneter Monofilamentcorde pro 5 cm in der Reifenbreitenrichtung (Corde/5 cm) in dem Querschnitt der Gurtlage in der Reifenradialrichtung und die Reifenquerschnittsbreite Wt (mm), wenn der Reifen an einer standardisierten Felge installiert ist und der Innendruck auf 250 kPa eingestellt ist, die folgenden (Formel 1) und (Formel 2) erfüllen.

$$e / (0{,}31\ Wt + 14{,}35) > 1{,}09 \quad \text{(Formel 1)}$$

$$e / (0{,}31\ Wt + 56{,}45) < 0{,}75 \quad \text{(Formel 2)}$$

2. Pneumatischer Reifen gemäß Anspruch 1, wobei die Reifenquerschnittsbreite Wt kleiner ist als 200 mm und durch Erfüllen der folgenden (Formel 3) gekennzeichnet ist.

$$e / (0{,}1924\ Wt + 37{,}88) > 1 \qquad \text{(Formel 3)}$$

3. Pneumatischer Reifen gemäß Anspruch 1 oder 2, wobei die Reifenquerschnittsbreite Wt kleiner ist als 200 mm und durch Erfüllen der folgenden (Formel 4) gekennzeichnet ist.

$$e / (0{,}1335\ Wt + 49{,}644) > 1 \qquad \text{(Formel 4)}$$

4. Pneumatischer Reifen gemäß einem der Ansprüche 1 bis 3, wobei die Anordnungsanzahl e der Monofilamentcorde pro 5 cm in der Reifenbreitenrichtung (Corde/5 cm) größer ist als 80 Corde/5 cm.

5. Pneumatischer Reifen gemäß einem der Ansprüche 1 bis 4, wobei in der Gurtlage der Verlusttangens (tan $\delta$), gemessen unter den Bedingungen einer Temperatur von 70 °C, einer Ausgangsdehnung von 5 %, einer dynamischen Dehnung von $\pm$ 1 %, einer Frequenz von 10 Hz, eines Verformungsmodus: Zug, der Gummimischung, die die Verstärkungscorde bedeckt, und die Durchschnittsentfernung L (mm) zwischen den zwei Monofilamentcorden, die in

der Breitenrichung benachbart sind, in dem Profilabschnitt, die folgende (Formel 5) erfüllen.

$$L \times \tan \delta > 0{,}017 \qquad \text{(Formel 5)}$$

6. Pneumatischer Reifen gemäß einem der Ansprüche 1 bis 5, wobei der Winkel, der durch den Verstärkungscord der Gurtlage und eine gerade Linie ausgebildet ist, die zu der Reifenumfangsrichtung parallel ist, 10° oder größer und 35° oder kleiner ist.

7. Pneumatischer Reifen gemäß einem der Ansprüche 1 bis 6, wobei mindestens zwei Gurtlagen vorgesehen sind und mindestens ein Paar Gurtlagen, die in der Reifenradialrichtung benachbart sind, mit einer Entfernung von 0,5 mm oder kleiner angeordnet sind.

8. Pneumatischer Reifen gemäß einem der Ansprüche 1 bis 7, wobei der Cordaußendurchmesser des Monofilamentcords 0,1 mm oder größer und 0,5 mm oder kleiner ist.

9. Pneumatischer Reifen gemäß einem der Ansprüche 1 bis 8, wobei der Profilabschnitt eine Umfangsnut hat, die sich durchgängig in der Reifenumfangsrichtung erstreckt, und das Verhältnis (L80/L0) der Nutbreite L80 bei 80 % der Maximaltiefe der Umfangsnut zu der Nutbreite L0 der Umfangsnut an der Kontaktfläche des Profilabschnitts 0,3 oder größer und 0,7 oder kleiner ist.

10. Pneumatischer Reifen gemäß einem der Ansprüche 1 bis 9, wobei der Profilabschnitt eine Vielzahl Umfangsnuten hat, die sich durchgängig in der Reifenumfangsrichtung erstrecken, und der Gesamtquerschnittsflächeninhalt der Vielzahl Umfangsnuten 10 % oder größer und 30 % oder kleiner des Querschnittsflächeninhalts des Profilabschnitts ist.

11. Pneumatischer Reifen gemäß einem der Ansprüche 1 bis 10, wobei der Profilabschnitt eine Vielzahl Lateralnuten hat, die sich in der Axialrichtung des Reifens erstrecken, und das Gesamtvolumen der Vielzahl Lateralnuten 2,0 % oder größer und 5,0 % oder kleiner des Volumens des Profilabschnitts ist.

**Revendications**

1. Pneumatique comportant une bande de roulement et une couche de ceinture, dans lequel

   la couche de ceinture utilise un câble monofilament comme câble de renforcement, et
   la largeur de section transversale du pneu Wt se réfère à la largeur du pneu, obtenue en excluant les motifs, lettres, etc. sur les flancs du pneu de la distance en ligne droite entre les flancs, y compris tous les motifs, lettres, etc. sur les flancs du pneu,
   **caractérisé en ce que**
   le nombre e de câbles monofilaments disposées par 5 cm dans le sens de la largeur du pneu (câbles/5 cm) dans la section transversale de la couche de ceinture dans le sens radial du pneu, et la largeur de la section transversale du pneu Wt (mm) lorsque le pneu est installé sur une jante normalisée et que la pression interne est réglée à 250 kPa satisfont aux formules suivantes (formule 1) et (formule 2).

$$e / (0{,}31\ Wt + 14{,}35) > 1{,}09 \qquad \text{(formule 1)}$$

$$e / (0{,}31\ Wt + 56{,}45) < 0{,}75 \qquad \text{(formule 2)}$$

2. Pneumatique selon la revendication 1, dans lequel la largeur de section transversale Wt du pneumatique est inférieure à 200 mm, et est **caractérisé par le fait qu'**il satisfait à la formule suivante (formule 3).

$$e / (0{,}1924\ Wt + 37{,}88) > 1 \qquad \text{(formule 3)}$$

3. Pneumatique selon la revendication 1 ou 2, dans lequel la largeur de section transversale Wt du pneumatique est inférieure à 200 mm, et est **caractérisé par le fait qu'**il satisfait à la formule suivante (formule 4).

$$e / (0{,}1335\ Wt + 49{,}644) > 1 \qquad \text{(formule 4)}$$

4. Pneumatique selon l'une quelconque des revendications 1 à 3, dans lequel le nombre d'arrangement e des câblés monofilaments par 5 cm dans le sens de la largeur du pneumatique (câblés/5 cm) est supérieur à 80 câblés/5 cm.

5. Pneumatique selon l'une quelconque des revendications 1 à 4, dans lequel, dans la couche de ceinture, la tangente de perte (tan δ), mesurée dans les conditions de température de 70 °C, de déformation initiale de 5 %, de déformation dynamique de ± 1 %, de fréquence de 10 Hz, de mode de déformation : tension, de la composition de caoutchouc recouvrant les câbles de renforcement et la distance moyenne L (mm) entre les deux câbles monofilaments adjacents dans le sens de la largeur dans la partie de la bande de roulement satisfont à la formule suivante (formule 5).

$$L \times \tan \delta > 0{,}017 \qquad \text{(formule 5)}$$

6. Pneumatique selon l'une quelconque des revendications 1 à 5, dans lequel l'angle formé par le câble de renforcement de la couche de ceinture et une ligne droite parallèle à la direction circonférentielle du pneumatique est de 10° ou plus et de 35° ou moins.

7. Pneumatique selon l'une quelconque des revendications 1 à 6, dans lequel au moins deux couches de ceinture sont prévues, et au moins une paire de couches de ceinture adjacentes dans la direction radiale du pneumatique sont disposées avec une distance de 0,5 mm ou moins.

8. Pneumatique selon l'une quelconque des revendications 1 à 7, dans lequel le diamètre extérieur de la câble monofilamentaire est de 0,1 mm ou plus et de 0,5 mm ou moins.

9. Pneumatique selon l'une quelconque des revendications 1 à 8, dans lequel la partie de bande de roulement comporte une rainure circonférentielle s'étendant de manière continue dans la direction circonférentielle du pneumatique, et le rapport (L80/L0) de la largeur de rainure L80 à 80 % de la profondeur maximale de la rainure circonférentielle sur la largeur de rainure L0 de la rainure circonférentielle sur la surface de contact de la partie de bande de roulement est de 0,3 ou plus et de 0,7 ou moins.

10. Pneumatique selon l'une quelconque des revendications 1 à 9, dans lequel la partie de bande de roulement comporte une pluralité de rainures circonférentielles s'étendant de manière continue dans la direction circonférentielle du pneumatique, et la surface de section transversale totale de la pluralité de rainures circonférentielles est de 10 % ou plus et de 30 % ou moins de la surface de section transversale de la partie de bande de roulement.

11. Pneumatique selon l'une quelconque des revendications 1 à 10, dans lequel la partie de bande de roulement comporte une pluralité de rainures latérales s'étendant dans la direction axiale du pneumatique, et le volume total de la pluralité de rainures latérales est de 2,0 % ou plus et de 5,0 % ou moins du volume de la partie de bande de roulement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018178034 A
- JP 2019089911 A
- WO 2018186367 A1
- JP 2019206643 A
- EP 1209009 A2
- JP 2015080972 A
- JP 2016203685 A
- US P4414370 A
- JP S596207 A
- JP H558005 B
- JP H1313522 A
- US P5010166 A


### Non-patent literature cited in the description


- *Toagosei Annual Report TREND2000* (3), 42-45